# EUROPÄISCHE PATENTANMELDUNG

(11) **EP 4 353 988 A1**
(43) Veröffentlichungstag der Anmeldung: **17.04.2024**
(21) Anmeldenummer: 23197030.2
(22) Anmeldetag: 13.09.2023
(51) Int. Cl.: F16F 9/05, F16F 9/32

(54) **FEDERUNG, VORZUGSWEISE FAHRZEUGFEDERUNG, BESONDERS VORZUGSWEISE SCHIENENFAHRZEUGFEDERUNG**

(30) Priorität: 12.10.2022 DE 102022210769
(71) Anmelder: ContiTech Luftfedersysteme GmbH, 30165 Hannover (DE)
(72) Erfinder: Kranz, Harald, 30165 Hannover (DE)
(74) Vertreter: Continental Corporation

(57) **Zusammenfassung**

Die vorliegende Erfindung betrifft eine Federung (2), vorzugsweise eine Fahrzeugfederung (2), besonders vorzugsweise eine Schienenfahrzeugfederung (2), mit wenigstens einer Luftfeder mit einem Luftfederbalg (21), welcher zwischen einem ersten Verbindungselement (20) und einem zweiten Verbindungselement (22) angeordnet ist. Die Federung (2) ist dadurch gekennzeichnet, dass der Luftfederbalg (21) wenigstens ein Markierungselement (21b) aufweist, welches mit dem Luftfederbalg (21) mitbeweglich angeordnet ist, und mit einem Aufnehmer (3), welcher ausgebildet ist, gegenüber dem Luftfederbalg (21) feststehend angeordnet zu werden und die Bewegung des Markierungselements (21b) zu erfassen.

## Beschreibung

Die vorliegende Erfindung betrifft eine Federung, vorzugsweise eine Fahrzeugfederung, besonders vorzugsweise eine Schienenfahrzeugfederung, sowie ein Fahrzeug mit einer derartigen Federung.

Zur Dämpfung von Schwingungen können je nach Anwendung verschiedene Arten von Federungssystemen eingesetzt werden. Hierzu gehören auch die Luftfederungen, welche die Kompressibilität von Gasen und insbesondere von Luft ausnutzen. Hierzu gehören auch Schienenfahrzeugfederungen mit einer Luftfeder, welche zwischen Karosserie bzw. Wagenkasten und Fahrwerk bzw. Fahrschemel eines Schienenfahrzeugs angeordnet sind.

Eine weit verbreitete Bauart einer Luftfederung sind Luftfedern mit konstantem Volumen in Regellage. In diesem Fall wird die Luft üblicherweise in einem Rollbalg eingeschlossen, welcher mit weiteren Beschlagteilen wie bei Straßenfahrzeugen mit einem Deckel oder einer Bördelplatte und einem Abrollkolben, kurz Kolben genannt, luftdicht verbunden ist. Dabei ist der Kolben sowohl mit dem unteren Ende des Rollbalgs verbunden als auch üblicherweise mit einer Achse bei Straßenfahrzeugen bzw. mit einem Fahrgestell bei Schienenfahrzeugen. Das obere Ende des Rollbalgs ist mit einem Deckel oder einer Bördelplatte verbunden, welche mit der Karosserie bzw. mit dem Chassis des Fahrzeugs verbunden ist. Bei Schienenfahrzeugen wird der Balg zwischen einer Gleitplatte oben und dem Kolben unten angeordnet.

Der Rollbalg ist über den Kolben gestülpt und rollt unter Druck auf diesem ab. Die Luftfeder kann durch einen Kompressor mit Druckluft versorgt werden, so dass in Abhängigkeit von der Beladung Luft zu- oder abgepumpt werden kann, um das Füllvolumen und somit die Niveaulage des Fahrzeugs konstant zu halten. Derartige Luftfedern werden bei verschiedenen Arten von Fahrzeugen wie insbesondere bei Straßenfahrzeugen wie insbesondere Lastkraftwagen, Anhänger und Omnibusse sowie Schienenfahrzeugen eingesetzt.

Die Luftfederung wirkt sich dabei deutlich auf den Fahrkomfort aus, wenn derartige Luftfederungen für Fahrzeuge verwendet werden. Auch hat die Qualität des Streckenverlaufs bei Schienenfahrzeugen sowie bei Landfahrzeugen einen großen Einfluss auf den Fahrkomfort sowie auf die Gewährleistung der Fahrstabilität.

Soll nun die Luftfederung, insbesondere bei Fahrzeugen und ganz besonders bei Schienenfahrzeugen, während des Betriebs bzw. während der Fahrt überwacht werden, sind bisher hierzu zusätzliche Sensoren seitens der Luftfeder erforderlich, was zu einem zusätzlichen Aufwand hinsichtlich Anschaffungs- und Montagekosten führt. Auch sind die Sensoren der Luftfeder während des Betriebs der Federung bzw. der Luftfeder zu betreiben, insbesondere elektrisch zu speisen, sowie sind die erfassten Daten von den Sensoren zu einer Steuerungseinheit der luftgefederten Vorrichtung bzw. des luftgefederten Fahrzeugs zu übertragen, um dort gespeichert bzw. ausgewertet zu werden. Dies bedeutet entsprechenden Aufwand.

Eine Aufgabe der vorliegenden Erfindung ist es, eine Federung, vorzugsweise eine Fahrzeugfederung, besonders vorzugsweise eine Schienenfahrzeugfederung, der eingangs beschriebenen Art bereit zu stellen, so dass die Federung im Betrieb einfacher als bisher bekannt sensorisch überwacht werden kann. Insbesondere soll der Fahrkomfort der Federung im Betrieb einfacher als bisher bekannt sensorisch überwacht werden können. Dies soll möglichst einfach, bauraumsparend, kostengünstig und bzw. oder verlässlich erfolgen können. Zumindest soll eine Alternative zu den bekannten Möglichkeiten zur Verfügung gestellt werden.

Die Aufgabe wird erfindungsgemäß durch eine Federung sowie durch ein Fahrzeug mit den Merkmalen der unabhängigen Ansprüche gelöst. Vorteilhafte Weiterbildungen sind in den Unteransprüchen beschrieben.

Somit betrifft die vorliegende Erfindung eine Federung, vorzugsweise eine Fahrzeugfederung, besonders vorzugsweise eine Schienenfahrzeugfederung, mit wenigstens einer Luftfeder mit einem Luftfederbalg, welcher zwischen einem ersten Verbindungselement und einem zweiten Verbindungselement angeordnet ist. Handelt es sich bei der Federung um eine Fahrzeug- bzw. um eine Schienenfahrzeugfederung, so handelt es sich bei dem ersten Verbindungselement um eine Fahrgestellbefestigung bzw. um einen Fahrgestellanbindung, welche vorzugsweise ein Kolben bzw. ein Abrollkolben sein kann. Bei dem zweiten Verbindungselement handelt es sich dann um eine Karosseriebefestigung bzw. um eine Karosserieanbindung, welche vorzugsweise ein Deckel bzw. ein Bördelplatte sein kann.

Die erfindungsgemäße Federung ist dadurch gekennzeichnet, dass der Luftfederbalg wenigstens ein Markierungselement aufweist, welches mit dem Luftfederbalg mitbeweglich angeordnet ist, und dass die Federung ferner einen Aufnehmer aufweist, welcher ausgebildet ist, gegenüber dem Luftfederbalg feststehend angeordnet zu werden und die Bewegung des Markierungselements zu erfassen. Unter einem Markierungselement ist ein Körper bzw. ein Element zu verstehen, welches ein bestimmte definierte Position des Luftfederbalgs markiert bzw. kennzeichnet, so dass diese Markierung bzw. Kennzeichnung von dem Aufnehmer sensorisch von außen erfasst und hierdurch die Position bzw. die Positionsänderung des Luftfederbalgs bestimmt werden kann. Dies kann insbesondere optisch, elektrisch, magnetisch oder elektromagnetisch erfolgen. Da das Markierungselement hierbei nicht mitwirkt, d.h. nicht aktiv ist, sondern lediglich vom Aufnehmer erfasst wird, kann das Markierungselement als passiv angesehen werden.

Mit anderen Worten kann seitens des Luftfederbalgs lediglich ein passives Markierungselement vorgesehen werden, welches mit dem Luftfederbalg an dieser Stelle mitbeweglich ist und von dem Aufnehmer sensorisch erfasst werden kann. Dabei kann die Position des Markierungselements gegenüber dem Aufnehmer vom Aufnehmer erfasst werden, so dass aus der Relativbewegung des Markierungselements gegenüber dem Aufnehmer auf die Relativbewegung des Luftfederbalgs gegenüber dem Aufnehmer und damit gegenüber der Umgebung des Luftfederbalgs geschlossen werden kann.

Aus den erfassten Daten bzw. Informationen kann z.B. auf das Betriebsverhalten der Federung wie insbesondere auf den Fahrtkomfort des entsprechenden Fahrzeugs geschlossen werden. Hierzu kann beispielsweise die Position bzw. die Positionsänderung des Markierungselements gegenüber dem Aufnehmer in einer Richtung gegenüber der Zeit aufgetragen und aus dem zeitlichen Verlauf der Position bzw. die Positionsänderung des Markierungselements gegenüber dem Aufnehmer auf das Betriebsverhalten geschlossen werden. Dies kann für unterschiedliche Raumrichtungen und vorzugsweise für mehrere Raumrichtungen parallel bzw. zeitgleich erfolgen.

In jedem Fall können Grenzwerte einer maximalen bzw. minimalen Position bzw. die Positionsänderung des Markierungselements gegenüber dem Aufnehmer vorgegeben werden, um beispielsweise zwischen einem gewünschten und ungewünschten Betriebsverhalten zu unterschieden. Auch kann auf diese Art und Weise zwischen einem komfortablen und unkomfortablen Betriebs- bzw. Fahrverhalten unterschieden werden. Die entsprechenden Grenzwerte können in Laborversuchen ermittelt werden und bzw. oder als Erfahrungswerte vorliegen.

Es kann auch die erste und ggfs. auch die zweite Abteilung des zeitlichen Verlauf der Position bzw. die Positionsänderung des Markierungselements gegenüber dem Aufnehmer wie zuvor beschrieben beurteilt werden, um die Schnelligkeit bzw. die Beschleunigung der Position bzw. die Positionsänderung des Markierungselements gegenüber dem Aufnehmer zur Auswertung heranziehen zu können. Dies kann die Möglichkeiten der Auswertung bzw. die Aussagekraft des Ergebnisses der Auswertung erhöhen.

Gemäß einem Aspekt der Erfindung ist der Aufnehmer ausgebildet, die Bewegung des Markierungselements in der vertikalen Richtung zu erfassen. Dies kann zu vergleichsweise deutlichen Bewegungen führen, welche sich entsprechend einfach erfassen und auswerten lassen, da die vertikale Richtung die wesentliche Bewegungsrichtung der Federung darstellen kann. Die Bewegung kann parallel zum Aufnehmer erfolgen, d.h. an diesem entlang bzw. an diesem vorbei, aber auch zum Aufnehmer hin bzw. vom Aufnehmer weg, was die Erfassung vereinfachen kann.

Gemäß einem weiteren Aspekt der Erfindung ist der Aufnehmer ausgebildet, die Bewegung des Markierungselements in der Längsrichtung zu erfassen. Im Fall einer Fahrzeugfederung kann die Längsrichtung der Bewegungsrichtung des Fahrzeugs entsprechen. Somit kann zusätzlich oder alternativ diese Richtung wie zuvor beschrieben erfasst werden.

Gemäß einem weiteren Aspekt der Erfindung weist die Federung ferner eine Steuerungseinheit auf, welche ausgebildet ist,
- die Bewegung des Markierungselements mittels des Aufnehmers zu erfassen und
- aus der erfassten Bewegung des Markierungselements die Qualität des Betriebs der Federung, vorzugsweise den Fahrkomfort der Federung, zu bestimmen.

Hierdurch können die erfassten Daten bzw. Informationen entsprechend genutzt werden.

Gemäß einem weiteren Aspekt der Erfindung ist das Markierungselement metallisch ausgebildet. Dies kann die Umsetzung vereinfachen und gleichzeitig eine zuverlässige sensorische Erfassung ermöglichen.

Gemäß einem weiteren Aspekt der Erfindung ist das Markierungselement als Spule ausgebildet. Dies kann eine konkrete Möglichkeit der Umsetzung darstellen.

Gemäß einem weiteren Aspekt der Erfindung ist der Aufnehmer ausgebildet, das metallische Markierungselement magnetisch zu erfassen. Dies kann eine konkrete Möglichkeit der Umsetzung darstellen. Dies kann die Umsetzung vereinfachen und gleichzeitig eine zuverlässige sensorische Erfassung ermöglichen.

Gemäß einem weiteren Aspekt der Erfindung ist das Markierungselement innerhalb des Materials des Luftfederbalgs eingebettet. Dies kann das Markierungselement schützen. Auch kann das Markierungselement auf diese Art und Weise fest, dauerhaft und positionssicher gegenüber dem Luftfederbalg angeordnet werden.

Gemäß einem weiteren Aspekt der Erfindung wird das Markierungselement von einem Mittelring, vorzugsweise von einem Stahlgürtel, des Luftfederbalgs gebildet. Der Mittelring kann der Versteifung und bzw. oder der Verstärkung des Luftfederbalgs dienen und somit ohnehin vorhanden sein, so dass der Mittelring zusätzlich als Markierungselement genutzt werden kann. Dies kann den Aufwand der Umsetzung der Erfindung geringhalten.

Gemäß einem weiteren Aspekt der Erfindung ist das Markierungselement in der vertikalen Richtung der Luftfeder, vorzugsweise entlang länglichen Erstreckung des Luftfederbalgs, etwa mittig angeordnet. Dies kann die Erfassung des Markierungselements bzw. dessen Position bzw. dessen Abstand relativ zum Aufnehmer, insbesondere bei Bewegungen in der vertikalen Richtung, begünstigen.

Die vorliegende Erfindung betrifft auch ein Fahrzeug, vorzugsweise ein Schienenfahrzeug, mit wenigstens einer Federung wie zuvor beschrieben. Hierdurch kann eine Umsetzung und Nutzung der erfindungsgemäßen Federung bei einem Fahrzeug erfolgen.

Gemäß einem Aspekt der Erfindung ist das Fahrzeug, vorzugsweise eine Steuerungseinheit des Fahrzeugs, ausgebildet,
- die Bewegung des Markierungselements mittels des Aufnehmers zu erfassen und
- aus der erfassten Bewegung des Markierungselements die Qualität des Betriebs der Federung, vorzugsweise den Fahrkomfort der Federung, zu bestimmen.

Hierdurch können die zuvor beschriebenen entsprechenden Aspekte einer konkreten Möglichkeit, die sensorisch erfasste Information zu nutzen, zusätzlich oder alternativ seitens des Fahrzeugs bzw. seitens dessen Steuerungseinheit umgesetzt und genutzt werden.

Mit anderen Worten betrifft die vorliegende Erfindung ist bei Luftfedersystemen, insbesondere bei der Verwendung bei Schienenfahrzeugen, der Fahrkomfort von großer bis entscheidender Bedeutung. Außer dem Federungssystem ist auch die Qualität des Streckenverlaufs eine wichtige Größe beim Fahrkomfort und der Gewährleistung der Fahrstabilität. Eine Überprüfung und Aufnahme ist üblicherweise mit einem hohen Aufwand und zusätzlicher Sensorik verbunden.

Es soll daher eine Möglichkeit geschaffen werden, während des Fahrbetriebes den Fahrkomfort sensorisch zu erfassen und aufzuzeichnen.

Der Kerngedanke beruht auf der Erfassung der Bewegung eines Gürtelbalges durch sensorische Registrierung des metallischen Gürtels. Der elektrisch leitende Kern in dem Gürtel eines Gürtelbalges besteht aus gewickelten Drahten. Dieser ist somit genauso aufgebaut wie eine Spule.

Die Bewegung des Gürtels in einem magnetischen Feld kann so zur Auswertung der Bewegungen des Luftfedersystems bzw. des Wagenkastens und somit des Fahrkomforts/Streckenprofils genutzt werden.

Der gewickelte Drahtgürtel kann unterschiedliche geometrische Formen annehmen. Es ist auch denkbar, ein Geflecht/Drahtwicklung auf einen normalen Luftfederbalg aufzubringen. Bestehende Luftfedersysteme können benutzt werden. Die eigentliche Sekundärfeder kann unverändert bleiben.

Ein Ausführungsbeispiel und weitere Vorteile der Erfindung werden nachstehend im Zusammenhang mit den folgenden Figuren erläutert. Darin zeigt:
- Fig. 1: eine seitliche schematische Darstellung eines erfindungsgemäßen Fahrzeugs am Beispiel eines Schienenfahrzeugs; und
- Fig. 2: eine schematische Schnittdarstellung einer erfindungsgemäßen Federung am Beispiel einer Schienenfahrzeugfederung.

Die Beschreibung der o.g. Figuren erfolgt in kartesischen Koordinaten mit einer Längsrichtung X, einer zur Längsrichtung X senkrecht ausgerichteten Querrichtung (nicht dargestellt) sowie einer sowohl zur Längsrichtung X als auch zur Querrichtung senkrecht ausgerichteten vertikalen Richtung Z. Die Längsrichtung X kann auch als Tiefe X, die Querrichtung auch als Breite und die vertikale Richtung Z auch als Höhe Z bezeichnet werden. Die Längsrichtung X und die Querrichtung bilden gemeinsam die Horizontale, welche auch als horizontale Ebene bezeichnet werden kann. Die Längsrichtung X, die Querrichtung und die vertikale Richtung Z können gemeinsam auch als Raumrichtungen X, Z bzw. als kartesische Raumrichtungen X, Z bezeichnet werden.

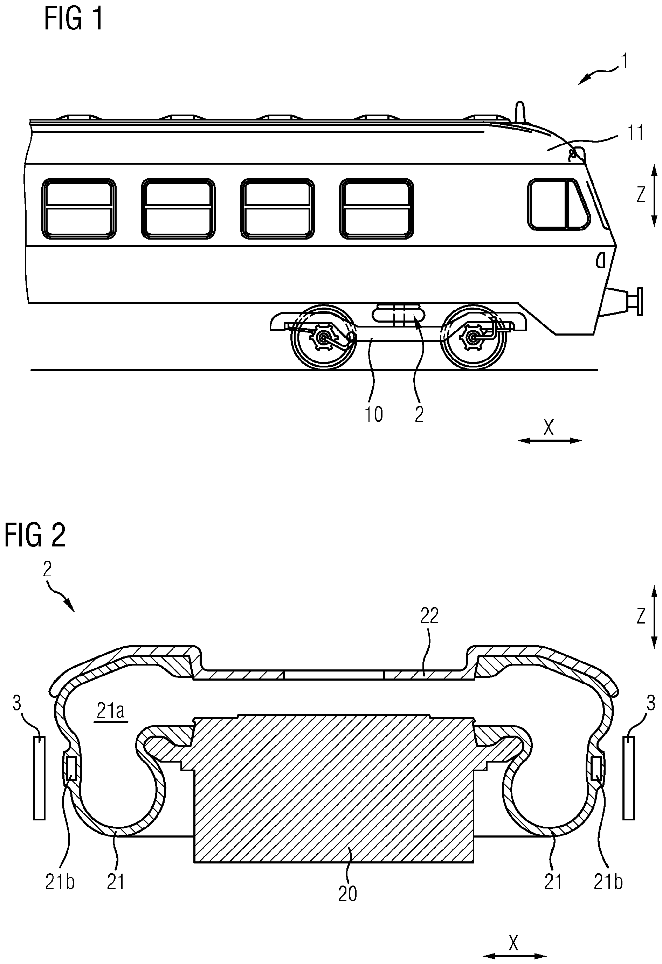

Eine erfindungsgemäße Federung 2 wird als Fahrzeugfederung 2 am Beispiel einer Schienenfahrzeugfederung 2 betrachtet. Die Schienenfahrzeugfederung 2 ist in der vertikalen Richtung Z zwischen einem Fahrgestell 10, auch Fahrschemel 10 genannt, und einer Karosserie 11 eines Fahrzeugs 1 angeordnet. Das Fahrzeug 1 wird am Beispiel eines Schienenfahrzeugs 1 bzw. eines Kurzstreckentriebwagens 1 betrachtet, siehe Figur 1.

Die Schienenfahrzeugfederung 2 weist, in der vertikalen Richtung Z von unten anfangend betrachtet, ein erstes Verbindungselement 20 auf, welche mit dem Fahrgestell 10 des Schienenfahrzeugs 1 verbunden ist. Das erste Verbindungselement 20 kann auch als Fahrgestellbefestigung 20 oder als Fahrgestellanbindung 20 bezeichnet werden und ist im betrachteten Ausführungsbeispiel als Kolben 20 bzw. als Abrollkolben 20 ausgebildet. In der vertikalen Richtung Z gegenüberliegend ist ein zweites Verbindungselement 22 vorgesehen, welches mit der Karosserie 11 des Schienenfahrzeugs 1 verbunden ist. Das zweite Verbindungselement 22 kann auch als Karosseriebefestigung 22 oder als Karosserieanbindung 22 bezeichnet werden und ist im betrachteten Ausführungsbeispiel als Deckel 22 bzw. als Bördelplatte 22 ausgebildet. In der vertikalen Richtung Z dazwischen ist ein Luftfederbalg 21 in Form eines Rollbalgs 21 vorgesehen, welcher gemeinsam mit den beiden Verbindungselementen 20, 22 ein Innenvolumen 21a umschließt, welches mit Druckluft gefüllt werden kann.

In der vertikalen Richtung Z etwa mittig ist ein Markierungselement 21b in Form einer metallischen Spule 21b innerhalb des Materials des Luftfederbalgs 21 eingebettet, welche gleichzeitig einen Mittelring 21b bzw. einen Stahlgürtel 21b des Luftfederbalgs 21 bildet. Hierdurch ist das Markierungselement 21b mit dem Luftfederbalg 21 mitbeweglich. In der Längsrichtung X neben dem Markierungselement 21b ist ein Aufnehmer 3 angeordnet. Der Aufnehmer 3 ist gegenüber dem Luftfederbalg 21 feststehend positioniert und zum Luftfederbalg 21 hin ausgerichtet, um die Bewegung des Markierungselements 21b sowohl in der vertikalen Richtung Z als auch in der Längsrichtung X zu erfassen.

Es ist eine Steuerungseinheit (nicht dargestellt) vorgesehen, um die Bewegung des Markierungselements 21b mittels des Aufnehmers 3 magnetisch zu erfassen und aus der erfassten Bewegung des Markierungselements 21b die Qualität des Betriebs der Federung, vorzugsweise den Fahrkomfort der Federung 2, zu bestimmen. Die Steuerungseinheit kann eine Steuerungseinheit des Schienenfahrzeugs 1 oder der Federung 2 als System sein. In jedem Fall kann aus den Relativbewegungen des Markierungselements 21b gegenüber dem Aufnehmer 3 auf das Betriebsverhalten der Federung 2 bzw. dessen Luftfeder und damit auch auf den Fahrkomfort der Federung 2 im Betrieb geschlossen werden.

### Bezugszeichenliste (Teil der Beschreibung)

- X: Längsrichtung; Tiefe
- Z: vertikale Richtung; Höhe

- 1: Fahrzeug; Schienenfahrzeug; Kurzstreckentriebwagen
- 10: Fahrgestell; Fahrschemel
- 11: Karosserie

- 2: Federung; Fahrzeugfederung; Schienenfahrzeugfederung
- 20: erstes Verbindungselement; Fahrgestellbefestigung; Fahrgestellanbindung; Kolben; Abrollkolben
- 21: Luftfederbalg; Rollbalg
- 21a: Innenvolumen des Luftfederbalgs 21
- 21b: Markierungselement, Mittelring bzw. Stahlgürtel des Luftfederbalgs 21
- 22: zweites Verbindungselement; Karosseriebefestigung; Karosserieanbindung; Deckel; Bördelplatte

- 3: Aufnehmer; Sensor

## Patentansprüche

1. Federung (2), vorzugsweise Fahrzeugfederung (2), besonders vorzugsweise Schienenfahrzeugfederung (2),
mit wenigstens einer Luftfeder mit einem Luftfederbalg (21), welcher zwischen einem ersten Verbindungselement (20) und einem zweiten Verbindungselement (22) angeordnet ist,
**dadurch gekennzeichnet, dass**
der Luftfederbalg (21) wenigstens ein Markierungselement (21b) aufweist, welches mit dem Luftfederbalg (21) mitbeweglich angeordnet ist, und
mit einem Aufnehmer (3), welcher ausgebildet ist, gegenüber dem Luftfederbalg (21) feststehend angeordnet zu werden und die Bewegung des Markierungselements (21b) zu erfassen.

2. Federung (2) nach Anspruch 1,
wobei der Aufnehmer (3) ausgebildet ist, die Bewegung des Markierungselements (21b) in der vertikalen Richtung (Z) zu erfassen.

3. Federung (2) nach Anspruch 1 oder 2,
wobei der Aufnehmer (3) ausgebildet ist, die Bewegung des Markierungselements (21b) in der Längsrichtung (X) zu erfassen.

4. Federung (2) nach einem der vorangehenden Ansprüche,
ferner mit einer Steuerungseinheit, welche ausgebildet ist,
• die Bewegung des Markierungselements (21b) mittels des Aufnehmers (3) zu erfassen und
• aus der erfassten Bewegung des Markierungselements (21b) die Qualität des Betriebs der Federung, vorzugsweise den Fahrkomfort der Federung (2), zu bestimmen.

5. Federung (2) nach einem der vorangehenden Ansprüche,
wobei das Markierungselement (21b) metallisch ausgebildet ist.

6. Federung (2) nach Anspruch 5,
wobei das Markierungselement (21b) als Spule ausgebildet ist.

7. Federung (2) nach Anspruch 5 oder 6,
wobei der Aufnehmer (3) ausgebildet ist, das metallische Markierungselement (21b) magnetisch zu erfassen.

8. Federung (2) nach einem der vorangehenden Ansprüche,
wobei das Markierungselement (21b) innerhalb des Materials des Luftfederbalgs (21) eingebettet ist.

9. Federung (2) nach einem der vorangehenden Ansprüche,
wobei das Markierungselement (21b) von einem Mittelring (21b), vorzugsweise von einem Stahlgürtel (21b), des Luftfederbalgs (21) gebildet wird.

10. Federung (2) nach einem der vorangehenden Ansprüche,
wobei das Markierungselement (21b) in der Höhe der Luftfeder, vorzugsweise entlang länglichen Erstreckung des Luftfederbalgs (21), etwa mittig angeordnet ist.

11. Fahrzeug (1), vorzugsweise Schienenfahrzeug (1),
mit wenigstens einer Federung (2) nach einem der vorangehenden Ansprüche.

12. Fahrzeug (1) nach Anspruch 11,
wobei das Fahrzeug (1), vorzugsweise eine Steuerungseinheit des Fahrzeugs (1), ausgebildet ist,
• die Bewegung des Markierungselements (21b) mittels des Aufnehmers (3) zu erfassen und
• aus der erfassten Bewegung des Markierungselements (21b) die Qualität des Betriebs der Federung, vorzugsweise den Fahrkomfort der Federung (2), zu bestimmen.
